# DEMANDE DE BREVET EUROPEEN

(11) **EP 2 093 522 A2**
(43) Date de publication de la demande: **26.08.2009**
(21) Numéro de dépôt: 09305144.9
(22) Date de dépôt: 16.02.2009
(51) Int. Cl.: F24J 2/26, F24J 2/46

(54) **Capteur solaire comportant des moyens d'étanchéité gonflables**

(30) Priorité: 19.02.2008 FR 0851034
(71) Demandeur: WITECK, 88470 Nompatelize (FR)
(72) Inventeur: Delaite, Jean François, 88470 Monpatelize (FR); Delaite, Eric, 88420 Moyenmoutier (FR); Delaite, Arnaud, 88470 Monpatelize (FR)
(74) Mandataire: Poupon, Michel

(57) **Abrégé**

L'invention concerne un capteur solaire, comportant au moins un tube échangeur connecté à une installation thermique et dans lequel circule un fluide caloporteur, ledit tube étant équipé extérieurement d'ailettes ou plaquettes pour capter l'énergie solaire, ledit capteur étant couvert par une ou des plaques de couverture (6, 111) laissant passer l'énergie solaire, **caractérisé en ce que :**
- ledit capteur comporte au moins une cellule thermique (Ci) ladite cellule (Ci) étant composée d'au moins un tube échangeur (10, 102, 103) maintenu à l'intérieur d'une cuvette rectangulaire comportant des ouvertures ou espaces d'aération (8, 115) sur deux bordures opposées ladite cuvette étant fermée sur le dessus par une plaque de couverture (8, 111).
- ledit capteur comporte des moyens gonflables disposés de sorte à permettre une aération de la cellule à travers lesdites ouvertures ou espaces (8, 115), lorsqu'ils sont mis en dépression et à stopper l'aération lorsqu'ils sont mis en pression.

## Description

L'invention concerne un capteur d'énergie solaire perfectionné pour une installation de chauffage à fluide caloporteur ainsi qu'une installation comportant ce capteur.

L'invention s'applique à un capteur solaire de type connu composé de cellules thermiques adjacentes, chaque cellule comportant un tube métallique en forme de U dans lequel circule un fluide caloporteur. Les branches rectilignes du tube sont solidarisées chacune à une ou des ailettes ou plaques permettant d'augmenter la surface d'échange de chaleur. Il est connu également de couvrir les cellules par une ou des plaques de protection translucides aptes à être traversées par l'énergie solaire. Généralement les entrées et sorties des tubes en U de toutes les cellules sont connectées à un circuit hydraulique d'une pompe à chaleur ou d'un accumulateur dans une installation de chauffage d'une habitation ou autre.

Le but de l'invention est de perfectionner ce type de capteur en optimisant sa fabrication et en l'équipant d'un dispositif d'aération pouvant être géré automatiquement.

Ce but est atteint par un capteur solaire, comportant au moins un tube échangeur connecté à une installation thermique et dans lequel circule un fluide caloporteur, ledit tube étant équipé extérieurement d'ailettes ou plaquettes pour capter l'énergie solaire, ledit capteur étant couvert par une ou des plaques de couverture laissant passer l'énergie solaire, caractérisé en ce que :
- ledit capteur comporte au moins une cellule thermique ladite cellule étant composée d'au moins un tube échangeur maintenu à l'intérieur d'une cuvette présentant par exemple en vue de dessus une forme sensiblement rectangulaire et comportant des ouvertures ou espaces d'aération sur deux bordures opposées ladite cuvette étant fermée sur le dessus par une plaque de couverture.
- ledit capteur comporte des moyens gonflables disposés de sorte à permettre une aération de la cellule à travers lesdites ouvertures ou espaces, lorsqu'ils sont mis en dépression et à stopper l'aération lorsqu'ils sont mis en pression.

Selon un mode de mise en oeuvre, ledit capteur comporte au moins une cellule thermique étanche à ses extrémités et comportant des espaces le long des bordures longitudinales, et caractérisé en ce que les éléments gonflables sont aptes à obturer les espaces lorsqu'ils sont mis en pression, ou à ouvrir lesdits espaces lorsqu'ils sont mis en dépression.

Selon un autre mode de mise en oeuvre, ledit capteur comporte au moins une cellule étanche le long de ses grandes bordures latérales, les deux autres bordures étant ouvertes, chaque cellule comportant au moins un tube maintenu à distance du fond de la cellule par des supports, chaque cellule étant couverte par une plaque de couverture.

On comprendra mieux l'invention à l'aide de la description ci-après faite en référence aux figures annexées suivantes :
- figure 1 : vue générale d'un premier mode de mise en oeuvre non limitatif d'un capteur selon l'invention comportant trois cellules thermiques adjacentes.
- figure 2 : vue du capteur de la figure 1 dont les plaques de couvertures sont enlevées.
- figure 3 : vue en coupe selon CC de la figure 1.
- figures 4 et 5 : détails A et B de la figure 3.
- figure 6 : vue de détail d'une variante du moyen de support des plaques translucide.
- figure 7 : vue générale d'un toit sur lequel est installé un capteur selon un deuxième mode de mise en oeuvre non limitatif de l'invention.
- figure 8 : vue de détail de la partie basse du capteur de la figure 7, les plaques de couverture étant enlevées.
- figure 9 : figure 8 sur laquelle le caisson bas du capteur est enlevé.
- figure 10 : vue de détail de la partie haute du capteur de la figure 7 avec caisson haut découvert.
- figure 11 : vue générale d'une cuvette composant une cellule avec plaque de couverture.
- figure 12 : vue en éclaté d'une cellule thermique du deuxième mode de mise en oeuvre, montrant la cuvette, les tubes et leurs ailettes, les supports des tubes et leurs ailettes, et la plaque de couverture.
- Figure 13 : vue en coupe transversale d'une cellule thermique du deuxième mode de mise en oeuvre montrant la disposition des tubes en U et de leurs ailettes.
- Figure 14 : vue en éclaté correspondant à la figure 7.
- Figure 15 : variante de réalisation des ailettes.

Le concept inventif général consiste à proposer d'une part un capteur de plusieurs cellules thermiques, chacune des cellules comportant un ou plusieurs tubes en U dans lequel circule le fluide caloporteur, le ou lesdits tubes étant disposés selon la plus grande dimension de ladite cellule, les cellules étant disposées côte à côte et deux cellules voisines étant adjacentes par leur plus grande bordure, et d'autre part de prévoir des moyens gonflables pour obturer ou ouvrir chaque cellule individuellement ou simultanément afin d'en permettre la ventilation.

Selon un premier mode de mise en oeuvre les moyens gonflables sont disposés sur les bordures longitudinales des cellules, les extrémités des cellules étant étanches.

Selon un deuxième mode de mise en oeuvre les moyens gonflables sont disposés aux extrémités des cellules et les bordures longitudinales sont étanches.

Selon un autre mode de réalisation, les deux premiers modes de réalisation pourraient être combinés.

On décrit ci-après successivement les deux premiers modes de mise en oeuvre et des variantes possibles concernant certaines des pièces qui les composent.

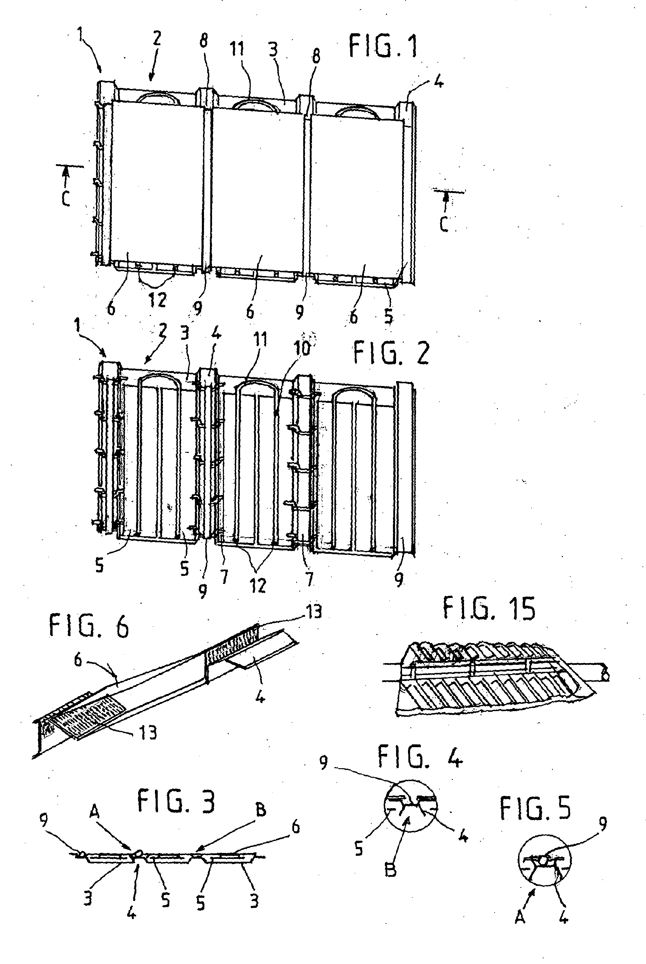

Un capteur solaire selon un premier mode de mise en oeuvre de l'invention et tel que représenté sur les figures 1 à 6 se compose d'un caisson porteur (1) en tôle pliée de façon à délimiter une succession de cuvettes rectangulaires (2) adjacentes et à fond plat (3), réunies sur leur plus grand coté par des ponts en U retourné (4). Cette conformation du caisson porteur permet de constituer des cellules d'échange thermique adjacentes les unes aux autres.

Dans chaque cuvette est fixé au moins un tube de circulation en U dont les branches rectilignes (10) sont équipées sur tout ou partie de leur longueur de plaques ou ailettes métallique (5) disposées parallèlement au fond des cuvettes.

Chaque cellule est fermée à ses deux extrémités par un capot étanche non représenté.

Les ouvertures supérieures des cuvettes sont couvertes par des plaques de couverture (6) laissant passer les rayons solaires.

Ces plaques de couverture (6) sont portées et maintenues parallèles au fond (3) par des pattes support (7) et destinées à surélever lesdites plaques par rapport aux dits ponts (4) d'une hauteur (h).

On prévoit plusieurs pattes supports (7) réparties le long d'un même pont par exemple cinq sur les figures.

Les plaques de couverture (6) ne sont pas jointives et il existe un espace (8) longitudinal entre deux plaques de couverture successives.

Préférentiellement, ce dispositif est un ensemble d'éléments tubulaires souples et gonflables (9) disposés chacun sous un espace (8) et entre la face supérieure d'un pont (4) et la sous face des plaques de couverture (6).

Les éléments gonflables (9) sont reliés à un circuit pneumatique permettant de les mettre sous pression ou en dépression.

Les dimensions et position de chaque élément gonflable sont calculées de telle sorte que :
- lorsqu'un élément gonflable est gonflé il obture complètement l'espace (8) entre deux plaques de couverture (voir figure 4) ce qui isole les unes des autres les cellules thermiques et fait fonctionner le capteur en capteur-solaire ;
- lorsqu'un élément gonflable est totalement dégonflé et aplati (voir figure 5) une circulation d'air peut s'établir entre l'extérieur et l'intérieur des cellules. Ceci permet d'éviter les surchauffes, ce qui évite la formation de vapeur et permet d'utiliser le capteur comme échangeur à air ;

La commande du circuit pneumatique peut être manuelle mais elle est de préférence gérée automatiquement par automate en fonction de la température détectée dans les cellules.

Des variantes de réalisation sont évidemment possibles sans sortir du cadre de l'invention. En particulier les profils du caisson et des ponts (4) peuvent être différents et des moyens autres que les pattes support (7) peuvent être utilisés pour maintenir les plaques de couverture (6) à distance du fond (3). La figure 6 en est un exemple et elle montre que les plaques de couverture (6) sont supportées par des plaques perforées ou des grilles (13) appuyées sur toute la longueur des ponts (4) et de chaque côté de façon à filtrer le passage de l'air et par exemple empêcher la pénétration de feuilles ou autres dans les cellules, et de façon à permettre au monteur de marcher sur les ponts lors de la pose ou de la maintenance. Les pattes (7) sont supprimées mais tous les autres composants dont les éléments gonflables (9) sont inchangés.

L'espace (8) peut être prévu sur toute ou partie seulement de la bordure des plaques de couverture. Les éléments gonflables peuvent être des éléments à section circulaire comme sur les figures mais on peut les remplacer par exemple par des joints à lèvre gonflables.

Les capots étanches peuvent avoir toute forme appropriée. Ils servent à fermer de façon étanche les deux extrémités de chaque cellule.

On note que la fabrication du capteur est optimisée par le choix de réaliser les fonds des cellules par emboutissage d'un caisson porteur (1).

On optimise encore la fabrication en réalisant chaque partie rectiligne (10) d'un tube en U et ses ailettes par emboutissage du conduit et pliage des ailettes dans une même tôle puis par soudure des lignes de pliage entre elles et sur toute leur longueur.

Les tubes sont réunis deux par deux par des coudes (11) et les sorties (12) des U ainsi formés sont reliées au circuit thermique de l'installation (non représentée) par des boîtes distributrices gérées par automate.

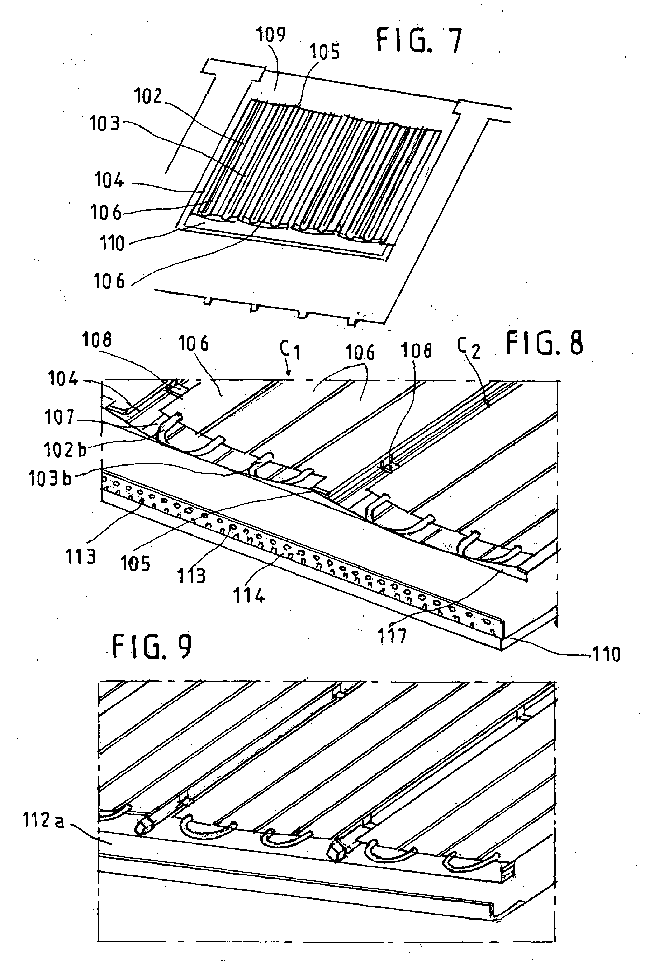

On décrit à présent un deuxième mode de réalisation non limitatif en liaison avec les figures7 à 14.

Une cellule (Ci) est une sorte de cuvette (101) qui comporte deux tubes en U (102, 103) dont les branches rectilignes (102a et 103a) sont réunies à une extrémité par un coude (102b, 103b) et sont disposées parallèlement aux bordures latérales (104, 105) de la cellule et sont équipées chacune d'ailettes (106) servant de façon comme en soi à capter les calories de l'énergie solaire.

Deux cellules voisines (C₁ et C₂) sont adjacentes et jointives par une de leur grande bordure c'est-à-dire par une de leur bordure latérale (104, 105), les cellules étant ouvertes sur leurs deux autres bordures d'extrémité.

Le fond (107) d'une cellule est réalisé en tôle emboutie ou autre matériau et les tubes sont maintenues à distance dudit fond (107) par des supports (108) par exemple des tiges -support espacées et disposées transversalement à la cellule.

Ces supports ont préférentiellement la particularité de présenter une forme concave dans la direction transversale de la cellule, et dont la concavité est tournée à l'opposé du fond (107) de la cellule, vers la plaque de couverture.

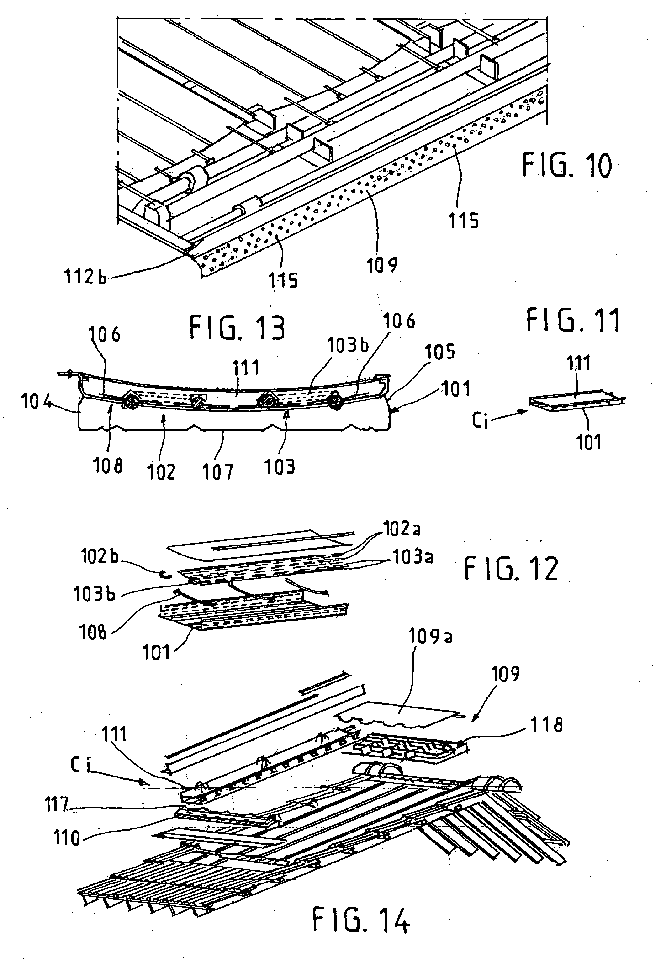

Les branches (102, 103) sont donc disposées selon cette même section concave, visible en particulier sur les figures 12, 13.
Cette disposition a pour conséquence que les ailettes planes (106) portées par les tubes ne sont pas coplanaires (voir figures 8 ou 13 par exemple), afin de diminuer la réverbération et l'éblouissement au dessus du toit. Cette réverbération peut encore être diminuée par des découpes des ailettes comme sur la figure 15.

Sur l'exemple de la figure 7, un toit de maison est équipé d'un capteur formé de quatre cellule C1, C2, C3, C4 du type ci-dessus, dont les tubes en U sont connectés à un distributeur-collecteur (118) de fluide prévu dans un caisson haut (109) dans lequel chaque cellule est débouchante par son extrémité supérieure. Le distributeur-collecteur peut être raccordé à une installation thermique par des boîtes distributrices gérées par automate.

Chaque cellule a en outre son extrémité inférieure débouchant dans un caisson bas (110).

Les caissons haut (109) et bas (110) sont des caissons disposés transversalement à la direction des cellules.

Chaque cellule est fermée sur le dessus par une plaque concave de couverture (111) et est étanche sur ses deux bordures latérales, une ventilation ne peut se faire que par circulation d'air selon la direction longitudinale, et par convection naturelle du bas d'une cellule vers le haut de celle-ci.

On peut prévoir d'obturer ou d'ouvrir chaque extrémité de cellule débouchant dans un caisson haut ou bas par un élément gonflable plaqué directement en bouts de cellule. Mais pour simplifier la construction il est préférable, comme sur les figures, de plaquer un élément gonflable (112a) continu contre des ouvertures (113) de la paroi extérieure (114) du caisson bas (110) et un autre contre des ouvertures (115) de la paroi extérieure (116) du caisson haut (109).

Sur la figure 8 l'élément gonflable (112a) n'est pas visible, il est visible en figure 9 où le caisson (110) est enlevé. Un cache d'étanchéité (117) découpé selon des arcs de cercle pour épouser la section concave des cellules et également visible en figure 9 par exemple.

L'élément gonflable est préférentiellement un tube gonflable, avec ou sans lèvre longitudinale, relié à un circuit pneumatique.

Lorsqu'il est sous pression, l'élément gonflable (112a) obture complètement les ouvertures (114), et les libère totalement ou partiellement lorsqu'il n'est pas sous pression.

On prévoit un autre élément gonflable similaire (112b) pour obturer et libérer les ouvertures (115) du caisson haut.

Cet élément est partiellement représenté en pointillés en figure 10 sur laquelle un capot (109a) (figure 14) du caisson haut (109) a été enlevé.

On peut également prévoir d'isoler thermiquement la cuvette en sous face et de peindre ou couvrir l'intérieur de ladite cuvette d'une peinture ou d'un matériau réfléchissant pour que les ailettes captent également des calories par leur sous face.

La présente demande couvre également les variantes de réalisation techniquement équivalentes.

## Revendications

**1.** Capteur solaire, comportant au moins un tube échangeur connecté à une installation thermique et dans lequel circule un fluide caloporteur, ledit tube étant équipé extérieurement d'ailettes ou plaquettes d'échange de l'énergie solaire, ledit capteur étant couvert par une ou des plaques de couverture (6, 111) laissant passer l'énergie solaire,
**caractérisé en ce que :**
- ledit capteur comporte au moins une cellule thermique (Ci) ladite cellule (Ci) étant composée d'au moins un tube échangeur (10, 102, 103) maintenu à l'intérieur d'une cuvette comportant des ouvertures ou espaces d'aération (8, 115) sur deux bordures opposées, ladite cuvette étant fermée sur le dessus par une plaque de couverture (8, 111).
- ledit capteur comporte des moyens gonflables disposés de sorte à permettre une aération de la cellule à travers lesdites ouvertures ou espaces (8, 114, 115), lorsqu'ils sont mis en dépression et à stopper l'aération lorsqu'ils sont mis en pression.

**2.** Capteur solaire selon la revendication 1 **caractérisé en ce qu'**il comporte au moins une cellule (Ci) étanche le long de ses grandes bordures latérales (104, 105) les deux autres bordures étant ouvertes, chaque cellule comportant au moins un tube maintenu à distance du fond de la cellule (107) par des support (108) chaque cellule étant couverte par une plaque de couverture (8, 11).

**3.** Capteur solaire selon la revendication 2, **caractérisé en ce que** les tubes sont des tubes en U, connectés à un distributeur-collecteur (118) prévu dans un caisson haut (109) dans lequel débouche chaque cellule par une de ses extrémités, l'autre extrémité de la cellule étant débouchante dans un caisson bas (110).

**4.** Capteur solaire selon l'une des revendications 2 à 3 **caractérisé en ce que** les support (108) ont une forme concave dans la direction transversale de la cellule, la concavité étant tournée vers la plaque de couverture.

**5.** Capteur solaire selon l'une des revendications 3 à 4 **caractérisé en ce que** les moyens gonflables sont disposés de sorte à obturer les extrémités ouvertes des cellules.

**6.** Capteur solaire selon l'une des revendications 3 à 4 **caractérisé en ce que** les moyens gonflables sont prévus pour se plaquer contre des ouvertures (113) d'une paroi (114) du caisson bas (110) et contre des ouvertures (115) d'une paroi (116) du caisson haut (109), de façon à obturer ou à libérer lesdites ouvertures selon qu'ils sont mis sous pression ou en dépression.

**7.** Capteur solaire selon la revendication 1 **caractérisé en ce qu'**il comporte au moins une cellule thermique (Ci) étanche à ses extrémités et comportant des espaces (8) le long des bordures longitudinales, et **caractérisé en ce** les éléments gonflables (9) sont aptes à obturer les espaces (8) lorsqu'ils sont mis en pression, ou à ouvrir lesdits espaces (8) lorsqu'ils sont mis en dépression.

**8.** Capteur solaire selon la revendication 7 **caractérisé en ce qu'**il se compose d'un caisson porteur (1) en tôle pliée de façon à délimiter une succession de cuvettes rectangulaires (2) adjacentes et à fond (3), réunies sur leur plus grand coté par des ponts en U retourné (4), chaque cuvette portant au moins un tube en U comportant des ailettes (5), les ouvertures supérieures des cuvettes étant couvertes par des plaques de couverture (6) non jointives portées des moyens de support (7 ou 13) et séparées longitudinalement par l'espace (8), les cuvettes étant fermées aux deux extrémités par des liaisons étanches.

**9.** Capteur solaire selon la revendication 8 **caractérisé en ce que** les éléments gonflables (9) sont disposés chacun sous un espace (8) et entre la face supérieure d'un pont (4) et la sous face des plaques de couverture (6).

**10.** Capteur solaire selon l'une des revendications 1 à 9 **caractérisé en ce que** les ailettes (5, 106) sont disposées sur les parties rectilignes des tubes et ses ailettes sont obtenues par emboutissage de la forme du tube et pliage des ailettes dans une même tôle puis par soudure entre elles des lignes de pliage.

**11.** Capteur solaire selon les revendications 6 à 10, **caractérisé en ce que** les moyens supports des plaques de couvertures sont des grilles (13).

**12.** Capteur solaire selon l'une des revendications 1 à 11, **caractérisé en ce que** les ailettes comportent des découpes inclinées.

**13.** Installation thermique pour l'utilisation de l'énergie solaire ou de l'énergie thermique de l'air pour chauffer un bâtiment ou une habitation, **caractérisée en ce qu'**elle comporte un ou plusieurs capteurs selon l'une des revendications 1 à 11, les tubes desdits capteurs sont réunis deux par deux par des coudes (11, 102b) et les sorties des U ainsi formés sont reliées au circuit thermique de l'installation par des boîtes distributrices gérées par automate.
